(19) Europäisches Patentamt
European Patent Office
Office européen des brevets

(11) **EP 2 581 589 A1**

(12) **DEMANDE DE BREVET EUROPEEN**

(43) Date de publication:
**17.04.2013 Bulletin 2013/16**

(51) Int Cl.:
***F02D 41/00*** *(2006.01)*

(21) Numéro de dépôt: **12290302.4**

(22) Date de dépôt: **12.09.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **12.10.2011 FR 1103113**

(71) Demandeur: **IFP Energies Nouvelles**
**92852 Rueil Malmaison Cedex (FR)**

(72) Inventeurs:
• **Bresch-Pietri, Delphine**
**94300 Vincennes (FR)**
• **Leroy, Thomas**
**78100 Saint Germain en Laye (FR)**
• **Chauvin, Jonathan**
**75017 Paris (FR)**

(54) **Procédé de contrôle d'un moteur à combustion à partir d'une estimation de la fraction massique de gaz brûlés dans le collecteur d'admission**

(57) Procédé de contrôle de combustion d'un moteur à combustion (1) à partir d'une estimation de la fraction massique de gaz brulés dans le collecteur d'admission.

On réalise une mesure relative à un débit d'air frais ou un débit de gaz brûlés, en amont du volume de mélange dans lequel air frais et gaz brûlés se mélangent. Puis, on estime la fraction massique de gaz brûlés présente dans le volume de mélange, à partir de la mesure et d'un modèle de la dynamique de mélange dans ce volume. On estime un retard de transport depuis le volume jusqu'au collecteur d'admission. Ensuite, on en déduit en temps réel la fraction massique de gaz brûlés dans le collecteur d'admission. Enfin, on contrôle la combustion à partir de la fraction massique de gaz brûlés dans le collecteur d'admission.

**Fig. 3**

**EP 2 581 589 A1**

## Description

La présente invention concerne le domaine du contrôle moteur et plus particulièrement l'estimation du taux de recirculation de gaz brûlés pour un moteur à essence muni d'un circuit EGR.

La réduction de la taille de la cylindrée ("downsizing") des moteurs à essence apparaît actuellement comme la solution privilégiée pour réduire la consommation des moteurs à essence. Cette technologie permet en effet de déplacer les points de fonctionnement du moteur dans les zones de meilleur rendement et de limiter ainsi les pertes par pompage, inhérentes au fonctionnement d'un moteur à combustion interne. Ce type de moteur nécessite alors la présence d'un compresseur, entraîné par une turbine située dans la ligne d'échappement. Un tel dispositif est utilisé pour améliorer le remplissage en air du cylindre et assurer un couple équivalent à celui d'un moteur de cylindrée classique. De la sorte, il est possible de fournir les mêmes performances, tout en réduisant drastiquement la consommation.

Néanmoins, l'utilisation d'une telle technologie augmente fortement les risques d'apparition du phénomène de cliquetis. Lorsque le moteur est en pleine charge, les conditions thermodynamiques dans la chambre de combustion peuvent être préjudiciables à la stabilité du mélange et engendrer son auto-inflammation. Ce phénomène peut, à terme, détériorer fortement la chambre de combustion.

Pour résoudre ce problème, usuellement, on dégrade l'avance à l'allumage. Cette solution engendre une augmentation de la température des gaz en fin de combustion et donc sur l'ensemble de la ligne d'échappement. Ainsi, pour compenser ce phénomène, on enrichit le mélange à l'admission.

Une telle méthode présente deux inconvénients : tout d'abord, elle augmente la consommation du moteur ; de plus, elle détériore l'efficacité du catalyseur placé en aval du collecteur échappement et qui convertit de façon optimale les polluants issus de la combustion lorsque le mélange est en proportions stoechiométriques.

Dans ce contexte, la recirculation de gaz brûlés de l'échappement EGR à l'admission est une voie prometteuse. En effet, l'introduction de gaz brûlés dans un cylindre du moteur, qui ne réagissent pas lors de la combustion, permet de diminuer la température globale de combustion et de limiter l'apparition de cliquetis. Les avantages du "downsizing" en termes de rendement et de consommation sont donc préservés. En outre, l'introduction de gaz brûlés permet également de réduire la température des gaz d'échappement et donc de limiter l'impact de ces derniers sur le catalyseur ou la turbine.

Cependant, une telle stratégie a une influence importante sur le fonctionnement global du moteur. Par exemple, la masse d'air emprisonnée dans le cylindre est moins importante dans une configuration avec EGR, puisque des gaz brûlés prennent la place de l'air frais dans le cylindre. Pour fonctionner à stoechiométrie, il est nécessaire d'adapter la boucle de carburant à la boucle d'air et donc d'avoir une estimation précise de la composition des gaz dans le cylindre. Un tel raisonnement s'applique également aux stratégies de pilotage des actionneurs de distribution variable (type VVT) ou à celle d'avance à l'allumage. Par ailleurs, cette estimation est essentielle pour la gestion des transitoires de couple, notamment à bas régime où une trop forte présence de gaz brûlés peut éteindre la combustion.

C'est pourquoi la mise en place d'un estimateur de la composition des gaz dans le collecteur d'admission est nécessaire pour piloter correctement la combustion (contrôle de l'avance à l'allumage, contrôle de la composition des gaz par exemple), et ce en particulier pendant les régimes transitoires.

La composition du mélange à l'admission est donc une information fondamentale. Le procédé selon l'invention permet d'estimer en temps réel une telle composition, notamment la fraction massique de gaz brûlés présente dans le mélange au niveau du collecteur d'admission, puis de contrôler la combustion en pilotant l'avance à l'allumage ou en contrôlant cette fraction par un pilotage de la vanne EGR (6).

## Le procédé selon l'invention

De façon générale, l'invention concerne un procédé de contrôle de combustion d'un moteur à combustion (1) comprenant au moins un cylindre (2), un circuit d'admission comportant un collecteur d'admission (3), et un circuit de recirculation des gaz brûlés intégrant une vanne EGR (6). Le procédé comporte les étapes suivantes :

- on réalise une mesure relative à un débit de gaz, air frais ou gaz brûlés, en amont d'un volume $V_{bp}$ de mélange, dans lequel air frais et gaz brûlés se mélangent ;

- on estime une fraction massique $BGR_{bp}$ de gaz brûlés présente dans ledit volume de mélange, à partir de ladite mesure et d'un modèle de la dynamique de mélange dans ledit volume ;

- on estime un retard de transport depuis ledit volume jusqu'audit collecteur d'admission ;

- on estime en temps réel une fraction massique $BGR(t)$ de gaz brûlés dans le collecteur d'admission à partir de ladite estimation de la fraction massique de gaz brûlés présente dans le volume de mélange et ledit retard de transport ;

- on contrôle la combustion à partir de ladite fraction massique $BGR(t)$ de gaz brûlés dans le collecteur d'admission.

Selon l'invention, le modèle de la dynamique de mélange dans le volume de mélange peut être fonction d'une pression atmosphérique, d'une température en amont de la vanne EGR, dudit volume $V_{bp}$, d'un débit massique $D_{gb}(t)$ de gaz brûlés introduit par la vanne EGR, et d'un débit massique d'air frais $D_{air}(t)$ en entrée du circuit d'admission.

Selon l'invention, on peut calculer le retard pur $\tau$ en résolvant une loi d'écoulement laminaire itérativement sur des zones du circuit d'admission définies de façon à ce que des conditions thermodynamiques dans chaque zone soient homogènes. Pour ce faire, on peut définir trois zones de la façon suivante : une première zone dans laquelle les conditions thermodynamiques correspondent aux conditions atmosphériques ; une seconde zone dans laquelle pression et température augmentent lors du transport des gaz, et une troisième zone où la température diminue, constituée par la zone restante du circuit d'admission.

Selon un mode de réalisation, la mesure est une mesure de débit massique d'air frais en entrée de la ligne d'admission. Selon un autre mode de réalisation, la mesure est une mesure d'une différence de pression $\Delta P$ au niveau de la vanne EGR, et on estime la fraction massique $BGR_{bp}$ de gaz brûlés présente dans ledit volume, à partir de la différence de pression $\Delta P$ et à partir d'une relation de perte de charge ponctuelle appliquée au niveau de ladite vanne EGR.

Selon un mode de réalisation, on contrôle la combustion par un pilotage d'une avance à l'allumage en ajoutant un terme proportionnel à la fraction massique $BGR(t)$ de gaz brûlés dans le collecteur d'admission.

Selon un autre mode de réalisation, on contrôle la combustion par un pilotage d'une masse d'air enfermée dans le cylindre, en commandant ladite vanne EGR (6) de façon à minimiser l'écart entre $BGR(t)$ et une consigne de fraction de gaz brûlés dans ledit collecteur d'admission (3) $BGR^{sp}$.

L'invention concerne également un moteur à combustion (1) comprenant au moins un cylindre (2), un collecteur d'admission (3), et un circuit de recirculation des gaz brûlés comportant une vanne EGR (6), ledit moteur à combustion étant pourvu d'un capteur de pression (5) au niveau de ladite vanne EGR (6) ou d'un débitmètre d'air (5') au début de la ligne d'admission. Le moteur comprend des moyens de commande adaptés à appliquer le procédé de contrôle selon l'invention.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- La figure 1 illustre un schéma de moteur à essence suralimenté comportant un circuit EGR.

- La figure 2 illustre un résultat de l'estimation de la fraction massique de gaz brûlés présente dans le mélange au niveau du collecteur d'admission, en utilisant le procédé selon l'invention.

- La figure 3 représente un schéma du procédé selon l'invention.

**Description détaillée de l'invention**

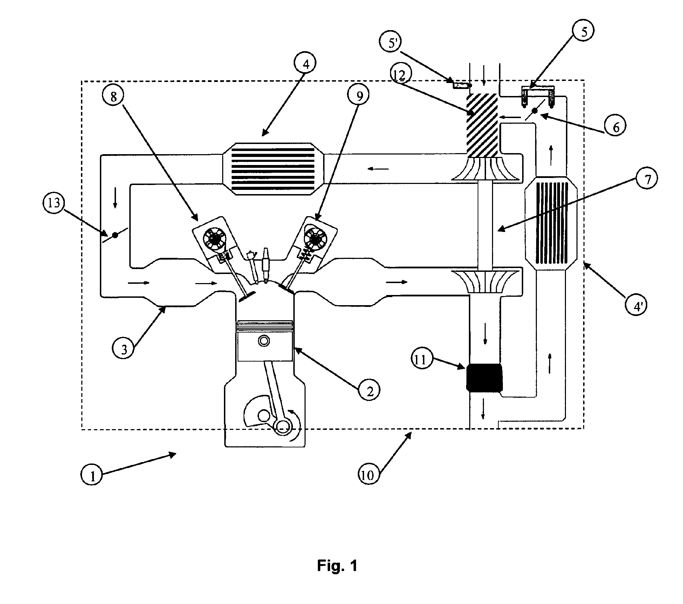

La figure 1 représente un moteur à essence (1) équipé d'un circuit de recirculation des gaz brûlés EGR. Au moins un cylindre (2) du moteur à combustion (1) est alimenté en air et gaz brûlés à partir d'un collecteur d'admission (3). Le circuit d'admission d'air est équipé d'un refroidisseur (4) et d'un compresseur d'un turbocompresseur (7). La ligne d'échappement est composée d'un collecteur d'échappement (13), d'une turbine du turbocompresseur (7), d'une dérivation, pour injecter une partie des gaz brûlés dans le circuit d'admission d'air. Cette partie du circuit est équipée notamment d'un refroidisseur (4') et d'une vanne commandée, dite vanne EGR (6), qui pilote la quantité de gaz brûlés injectés dans le circuit d'admission d'air. Ce moteur est en particulier équipé soit d'un capteur (5) de différence de pression au niveau de la vanne EGR, soit d'un débitmètre d'air (5') au début de la ligne d'admission. Le moteur (1), tel que représenté en figure 1, est également équipé d'un dispositif d'injection directe et d'une distribution variable, éléments usuellement présents sur un moteur "downsizé" (dont on a réduit la cylindrée) mais dont la présence n'intervient pas dans le procédé selon l'invention.

Le circuit de recirculation des gaz brûlés considéré vient prélever des gaz brûlés à l'échappement du moteur en aval de la turbine du turbocompresseur (7) et du catalyseur (11) pour les réinjecter à l'admission d'un cylindre (2) en amont du compresseur du turbocompresseur (7). La quantité de gaz brûlés réinjectés dans la ligne d'admission est pilotée par la vanne EGR (6) commandée située en aval du circuit de recirculation des gaz brûlés EGR.

Un moteur à essence fonctionnant de façon optimale lorsque la proportion du mélange air/essence permet d'assurer une combustion complète du carburant sans excès d'air, on considère généralement que les gaz d'échappement sont constitués intégralement de gaz brûlés. De la sorte, le circuit de recirculation des gaz brûlés EGR est rempli uniquement de gaz brûlés.

**Notations**

Au cours de la description, les termes amont et aval sont définis par rapport au sens de l'écoulement des fluides dans la boucle d'air (10). De plus, les notations principales utilisées sont les suivantes :

- $t$ : temps

- $x$ : points dans le circuit d'admission

Paramètres du moteur

- $P_{atm}, T_{atm}$ : pression et température atmosphériques. Elles peuvent être considérées comme constantes.

- $T_{am}$ : température en amont, en entrée, de la vanne EGR. Cette température est imposée par le passage dans l'échangeur (4') situé dans le circuit de recirculation des gaz brûlés.

- $V_{bp}$ :. Le volume de mélange d'air frais et des gaz brûlés, en aval de la vanne EGR. Il s'agît du volume des canalisations à l'intersection des canalisations d'arrivée d'air frais et des canalisations d'arrivée des gaz brûlés, ce volume se poursuivant jusqu'au compresseur du turbo compresseur (7). Ce volume correspond à la zone hachurée (12) de la figure 1.

- $V_{adm}$ : volume du collecteur d'admission.

- $P_{adm}, T_{adm}$ : pression et température dans le collecteur d'admission. Classiquement, la température d'admission est considérée constante. En effet, l'échangeur situé en amont du collecteur est dimensionné de sorte à assurer une telle régulation.

- $\Phi_{adm}, \Phi_{ech}$ : position des actionneurs des soupapes d'admission (8) et d'échappement (9). Ces variables quantifient un déphasage par rapport à une position de référence.

- $N_e$ : régime du moteur.

Variables du modèle de la boucle d'air

- $BGR$ : fraction massique de gaz brûlés dans le mélange d'air (air frais et gaz brûlés) au niveau du collecteur d'admission (3). Elle conditionne la masse de gaz brûlés présents dans le cylindre à la fermeture de la soupape d'admission (8).

- $BGR_{bp}$ : fraction massique de gaz brûlés dans le mélange d'air (air frais et gaz brûlés) au niveau du volume en aval de la vanne EGR (12).

- $D_{gb}(t)$ : débit massique de gaz brûlés introduit par la vanne EGR (6).

- $D_{air}(t)$ : débit massique d'air frais en entrée de la ligne d'admission. Cette grandeur peut, selon l'instrumentation, être mesurée par un débitmètre à air (5').

- $D_{asp}$ : débit massique de remplissage du cylindre en mélange d'air (air frais et gaz brûlés)

- $D_{thr}$ : débit massique du mélange d'air (air frais et gaz brûlés) en amont du compresseur du turbocompresseur (7).

- $\tau$ : retard de transport des gaz entre le moment du mélange de l'air frais et des gaz brûlés, et l'arrivée dans le collecteur d'admission.

- $S$ : surface efficace de la vanne EGR. Cette grandeur caractérise la surface de fluide pouvant être apte à traverser la vanne, elle est reliée à l'ouverture de la vanne via une cartographie caractéristique de la vanne considérée.

- $P_{am}$ : pression en amont, en entrée de la vanne EGR.

- $P_{av}$ : pression en aval, en sortie de la vanne EGR.

- $\Delta P$ : différence de pression entre l'amont et l'aval de la vanne EGR : $\Delta P = P_{am} - P_{av}$. Cette grandeur peut, selon l'instrumentation, être mesurée grâce à l'instrumentation (5) de la vanne EGR.

- $P,T$ : pression et température courantes, c'est-à-dire à un point x et à un instant t.

- $\nu$ : vitesse ponctuelle du mélange d'air (air frais + gaz brûlés) dans le circuit d'admission.

- $L_{cana}$ : longueur de la canalisation du circuit d'admission considérée.

- $A$ : section efficace courante de la canalisation du circuit d'admission considérée.

- $\rho$ : masse volumique du mélange gazeux

Constantes du modèle de la boucle d'air

- r : constante spécifique des gaz parfaits, qui est la même pour tous les gaz concernés ici (air et gaz d'échappement), et qui vaut 288 J/kg/K.

- $\gamma$ : rapport de capacités massiques des gaz. Les gaz étant supposés parfaits, ce rapport est une constante identique pour tous les gaz concernés, et vaut 1,4.

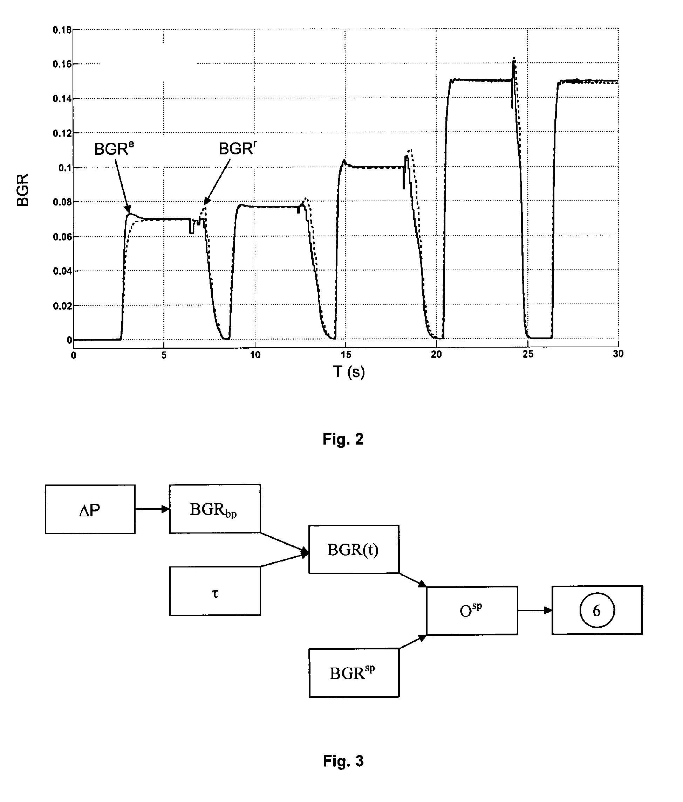

Ces notations, indexées par la mention-*sp* , représentent les consignes associées aux grandeurs considérées.
Le procédé selon l'invention permet d'estimer la fraction massique de gaz brûlés présente dans le mélange au niveau du collecteur d'admission, puis de contrôler cette fraction en pilotant la vanne EGR (6) du circuit de recirculation de gaz d'échappement. Il s'appuie sur l'utilisation soit d'un capteur de différence de pression au niveau de la vanne EGR soit d'un débitmètre au début de la ligne d'admission. La figure 3 représente un schéma du procédé selon l'invention, qui comporte les étapes suivantes :

1. Acquisition d'une mesure relative à un débit massique de gaz en amont de la zone de mélange dans le circuit d'admission

2. Estimation en temps réel de la fraction massique de gaz brûlés présente dans le mélange au niveau du collecteur d'admission :

    i. estimation de la fraction massique de gaz brûlés présente dans le volume de mélange des gaz.

    ii. estimation du retard de transport depuis ce volume jusqu'au collecteur d'admission

3. Contrôle de la combustion à partir du BGR estimé

1. Acquisition d'une mesure relative au débit massique de gaz dans le circuit d'admission

La première étape consiste à réaliser une mesure relative à un débit massique de gaz (air frais ou gaz brûlés) en amont de la zone de mélange (de l'air frais et des gaz brûlés) dans le circuit d'admission. Le volume de mélange correspond à un volume en aval de la vanne EGR. Il s'agit du volume des canalisations à l'intersection des canalisations d'arrivée d'air frais et des canalisations d'arrivée des gaz brûlés, ce volume se poursuivant jusqu'au compresseur du turbo compresseur (7). Ce volume correspond à la zone hachurée (12) de la figure 1.

Il peut s'agir d'une valeur relative au débit de gaz brûlés, ou une valeur relative au débit massique d'air frais en entrée de la ligne d'admission.

Selon un mode réalisation, on mesure le débit massique d'air frais en entrée de la ligne d'admission au moyen d'un débitmètre d'air (5') placé au début de la ligne d'admission.

Selon un autre mode de réalisation (figure 3), on mesure la différence entre la pression en aval de la vanne EGR et la pression en amont de la vanne EGR. Pour ce faire, on utilise un capteur (5) de différence de pression au niveau de la vanne EGR.

Cette valeur est corrélée au phénomène se produisant au niveau de la vanne, et notamment au niveau du volume de mélange, où se produit le mélange d'air frais et de gaz brûlés.

Pour remonter à une estimation de la fraction massique de gaz brûlés au niveau du collecteur d'admission, on estime la fraction massique de gaz brûlés au niveau du volume de mélange, à partir de cette mesure de différence de pression ou à partir de la mesure donnée par le débitmètre d'air, puis on applique un retard consécutif au trajet du volume de mélange jusqu'au collecteur d'admission.

2. Estimation en temps réel de la fraction massique de gaz brûlés présente dans le mélange au niveau du collecteur d'admission

Le circuit de recirculation (circuit EGR) des gaz brûlés vient prélever des gaz brûlés à l'échappement en aval de la turbine pour les réinjecter à l'admission en amont du compresseur. La quantité de gaz brûlés réinjectés dans la ligne d'admission est pilotée par une vanne située à la jonction entre la ligne d'admission et le circuit de recirculation EGR, donc en aval du circuit EGR. Cet actionneur (vanne EGR) étant spatialement éloigné du collecteur d'admission, un retard de transport conséquent et variable, est induit sur la ligne d'admission entre la fraction massique de gaz brûlés au niveau du volume de mélange, en aval de la vanne EGR, et celle au niveau du collecteur d'admission. Le volume de mélange est le volume des canalisations à l'intersection des canalisations d'arrivée d'air frais et des canalisations d'arrivée des gaz brûlés, ce volume se poursuivant jusqu'au compresseur du turbo compresseur (7). Ce volume correspond à la zone hachurée (12) de la figure 1.

Un moteur à essence fonctionnant de façon optimale lorsque la proportion du mélange air/essence permet d'assurer une combustion complète du carburant sans excès d'air, on considère généralement que les gaz d'échappement sont constitués intégralement de gaz brûlés. De la sorte, le circuit EGR est rempli uniquement de gaz brûlés. Il est alors possible de modéliser la dynamique des gaz brûlés réinjectés en deux temps :

- une dynamique de mélange dans le volume de mélange :

$$\frac{d}{dt}BGR_{bp}(t)=\frac{rT_{am}}{P_{atm}V_{bp}}\left(-\left[D_{gb}(t)+D_{air}(t)\right]BGR_{bp}+D_{gb}(t)\right) \tag{E1}$$

- une dynamique de transport depuis ce volume jusqu'au collecteur admission, représentée par un transport dans le temps :

$$BGR(t)=BGR_{bp}(t-\tau(t)) \tag{E2}$$

Ainsi, selon l'invention, pour estimer en temps réel la fraction massique $BGR(t)$ de gaz brûlés présente dans le mélange au niveau du collecteur d'admission, on estime la fraction massique de gaz brûlés présente dans le volume de mélange. Puis on estime le retard de transport depuis ce volume jusqu'au collecteur d'admission en segmentant la ligne d'admission selon les conditions thermodynamiques.

i. Estimation de la fraction massique de gaz brûlés présente dans le volume de mélange

Pour fournir une estimation de la composition en gaz brûlés dans le collecteur d'admission, on estime dans un premier temps la composition en gaz brûlés dans le volume de mélange. On souhaite donc résoudre l'équation 1 :

$$\frac{d}{dt}BGR_{bp}(t) = \frac{rT_{am}}{P_{atm}V_{bp}}\left(-\left[D_{gb}(t) + D_{air}(t)\right]BGR_{bp} + D_{gb}(t)\right)$$ Pour ce faire, on connaît les paramètres suivants :

- r : constante spécifique des gaz parfaits, qui est la même pour tous les gaz concernés ici (air et gaz d'échappement), et qui vaut 288 J/kg/K.
- $T_{am}$ : température en amont, en entrée, de la vanne EGR, cette température est imposée par le passage dans l'échangeur (4') situé dans le circuit de recirculation des gaz brûlés.
- $P_{atm}$ : pression atmosphériques. Elle peut être considérée comme constante au premier ordre.
- $V_{bp}$ : volume de mélange. Il s'agit d'une donnée du constructeur.

Et il faut estimer les paramètres suivants pour résoudre l'équation (E1) :

- $D_{air}(t)$ : débit massique d'air frais en entrée de la ligne d'admission.
- $D_{gb}(t)$ : débit massique de gaz brûlés introduit par la vanne EGR.

Pour estimer $D_{gb} + D_{air}$, le débit total massique des gaz (air frais et gaz brûlés) quittant le volume de mélange, on peut introduire $D_{thr}$, le débit massique des gaz (air frais et gaz brûlés) en amont du compresseur du turbocompresseur (7), et écrire $D_{thr} = D_{gb} + D_{air}$ = *débit total réel*. Ce débit $D_{thr}$ peut être estimé par un modèle construit en combinant un modèle statique de remplissage du cylindre, avec un modèle dynamique de la perte de charge ponctuelle survenant au niveau du papillon d'air frais (13 sur la figure 1). Par exemple :

$$D_{thr} = D_{asp} + \frac{r}{V_{adm}T_{adm}}\frac{dP_{adm}}{dt} \qquad (E6)$$

Où $P_{adm}$, $T_{adm}$ et $V_{adm}$ sont connues, et où $D_{asp}$ est le débit massique de remplissage du cylindre en gaz (air frais et gaz brûlés). On considère un modèle statique de remplissage estimant la masse de gaz brûlés dans le cylindre en fonction du régime du moteur, de la température et de la pression dans le collecteur d'admission et des positions d'actionneurs.

$$\begin{cases} M_{asp}^{int} = \alpha_1 \dfrac{P_{adm}}{rT_{adü}}V_{ivc} - M_{asp}^{ech} \\[2mm] M_{asp}^{ech} = \alpha_2 \dfrac{OF}{N_e} + \alpha_3 V_{evc} \end{cases} \qquad (E3)$$

avec

- $M_{asp}^{int}$ : masse de gaz brûlés à l'intérieur du cylindre

- $M_{asp}^{ech}$ : masse de gaz brûlés à l'échappement du cylindre

- $\alpha_1, \alpha_2, \alpha_3$: cartographies connues, fonction de $P_{adm}$ et $N_e$ (déterminées de manière expérimentale au banc moteur).
- $V_{ivc}$ : volume du cylindre lors de la fermeture de la soupape d'admission (ivc). Ce volume est fonction de la position de l'actionneur de la soupape d'admission $\Phi_{adm}$, et des dimensions du moteur.
- $V_{evc}$ : volume du cylindre lors de la fermeture de la soupape d'échappement (evc). Ce volume est fonction de la position de l'actionneur de la soupape d'échappement $\Phi_{ech}$, et des dimensions du moteur.
- OF : facteur de croisement. Il est fonction des positions des actionneurs des soupapes d'admission et d'échappement $\Phi_{adm}$ et $\Phi_{ech}$. Il peut être déterminé par la relation :

$$OF = \int_{\theta_{ivo}}^{\theta_{iv}=\theta_{ev}} A_{\text{int}}\, d\theta + \int_{\theta_{iv}=\theta_{ev}}^{\theta_{evc}} A_{ech}\, d\theta$$

avec

- $A_{adm}$ et $A_{ech}$ : aires d'ouverture des soupapes d'admission et d'échappement, il s'agit de paramètres du moteur.
- $\theta$ : angle vilebrequin.
- $\theta_{ivo}$ : angle vilebrequin lors de l'ouverture de la soupape admission (ivo). Cet angle est fonction de la position de l'actionneur de la soupape d'admission $\Phi_{adm}$.
- $\theta_{evc}$ : angle vilebrequin lors de la fermeture de la soupape d'échappement (evc). Cet angle est fonction de la position de l'actionneur de la soupape échappement $\Phi_{ech}$.
- $\theta_{iv} = \theta_{ev}$ : angle vilebrequin où les deux soupapes ont la même aire d'ouverture.

A partir de ce système d'équation (E3), on exprime la masse de gaz brûlés à l'intérieur du cylindre, à partir des paramètres moteur $P_{adm}$, $N_e$, $\Phi_{adm}$ et $\Phi_{ech}$ et du facteur de croisement OF.

En combinant les équations du système (E3), on peut définir alors une fonction g entre la masse de gaz brûlés en fonction des trois paramètres $P_{adm}$, $\Phi_{adm}$ et $\Phi_{ech}$ :

$$M_{asp}^{\text{int}} = g(P_{adm}, \Phi_{adm}, \Phi_{ech}) = \alpha_1(P_{adm}, N_e)\frac{P_{adm}}{rT_{adm}}V_{ivc}(\Phi_{adm}) - \alpha_2(P_{adm}, N_e)\frac{OF(\Phi_{adù}, \Phi_{ech})}{N_e} - \alpha_3(P_{adm}, N_e)V_{ech}(\Phi_{ech})$$

$$(E3')$$

Puis, on détermine le débit massique de remplissage en air du cylindre par la relation (E4) :

$$D_{asp} = \frac{Ne}{30}M_{asp}^{\text{int}} \qquad\qquad (E4)$$

On combine ensuite les équations (E3') et (E4), et, par souci de clarté, on omet le régime et la température d'admission dans l'expression. On peut ainsi définir une fonction f entre le débit massique de remplissage du cylindre et les trois paramètres $P_{adm}$, $\Phi_{adm}$ et $\Phi_{ech}$ ((E5)):

$$D_{asp} = \frac{N_e}{30}M_{asp}^{\text{int}} = \frac{N_e}{30}g(P_{adm}, \Phi_{adm}, \Phi_{ech}) = f(P_{adm}, \Phi_{adm}, \Phi_{ech}) \qquad (E5)$$

On peut en déduire le débit massique du mélange d'air (air frais et gaz brûlés) en amont du compresseur du turbocompresseur (7), par une relation du type :

$$D_{thr} = D_{asp} + \frac{r}{V_{adm}T_{adm}}\frac{dP_{adm}}{dt} \qquad\qquad (E6)$$

Pour estimer $D_{gb}(t)$, le débit massique de gaz brûlés introduit par la vanne EGR, on peut utiliser la mesure de différence entre la pression en aval de la vanne EGR et la pression en amont de la vanne EGR (étape 1), si le moteur est instrumenté d'un capteur dédié :

$$D_{gb} = \varphi(\Delta P) \tag{E7}$$

On applique une relation de charge ponctuelle au niveau de la vanne EGR, par exemple la relation de Barré-Saint Venant. On peut écrire une relation entre le débit massique des gaz brûlés introduits par la vanne EGR $D_{gb}$, la surface efficace S de la vanne EGR, la température en amont de la vanne $T_{am}$ et la différence de pression au niveau de la vanne (équation (11)):

$$D_{gb} = \frac{SP_{am}}{\sqrt{rT_{am}}} \begin{cases} \left(\dfrac{P_{av}}{P_{am}}\right)^{\frac{1}{\gamma}} \sqrt{\dfrac{2\gamma}{\gamma-1}\left(1-\left(\dfrac{P_{av}}{P_{am}}\right)^{\frac{\gamma-1}{\gamma}}\right)} \text{ si } \dfrac{P_{av}}{P_{am}} > \left(\dfrac{2}{\gamma+1}\right)^{\frac{\gamma}{\gamma-1}} \\[3em] \sqrt{\gamma\left(\dfrac{2}{\gamma+1}\right)^{\frac{\gamma+1}{\gamma-1}}} \end{cases}$$

sinon

Cette relation est obtenue par l'application la relation de Barré Saint-Venant pour un fluide s'écoulement d'un point 1 (amont) à un point x (aval), qui permet de déterminer la vitesse V du fluide au point x :

$$V(x) = \sqrt{\frac{2\gamma}{\gamma-1}rT_1\left(1-\frac{P(x)}{P_1}\right)^{\frac{\gamma}{\gamma-1}}}$$

$P_1$ étant la pression au point 1.

Ensuite, la vitesse est reliée au débit massique par la relation :

$$V(x) = \frac{D_{gb}}{\rho S}$$

Puis, pour obtenir l'équation (11), on applique la formule :

$$\rho = \frac{P_1}{rT}$$

La pression en aval de la vanne est considérée comme étant la pression atmosphérique, la relation ci-dessous peut donc être exprimée uniquement à l'aide de la quantité $\Delta P = P_{am} - P_{av}$ et $P_{atm}$. Dans un mode de réalisation avantageux de l'invention, ce modèle peut être linéarisé pour les faibles valeurs de $\Delta P$ (par exemple pour $\Delta P < 10\% P_{atm}$).

Alternativement, pour estimer $D_{gb}(t)$, le débit massique de gaz brûlés introduit par la vanne EGR, on peut utiliser un débitmètre d'air (5') qui mesure le débit massique d'air frais en entrée de la ligne d'admission ($D_{air}$), puis utiliser le modèle de débit exposé en ((E3)-(E6)) pour estimer le débit de gaz brûlés, en écrivant **Erreur ! Des objets ne peuvent pas être créés à partir des codes de champs de mise en forme..**

En utilisant le modèle ((E6) et (E5)) dans la dynamique de mélange ((E1)) en lieu et place du débit total réel ($D_{thr} = D_{gb} + D_{air}$ = *débit total réel*), on construit une estimation de la quantité de gaz brûlés se trouvant dans le volume de mélange, en écrivant

$$\frac{d}{dt} BGR_{bp}(t) = \frac{rT_{am}}{P_{atm} V_{bp}} \left( - D_{thr} BGR_{bp} + D_{gb}(t) \right)$$

Avec $D_{thr} = g\left( D_{asp}, \frac{dP_{adm}}{dt} \right)$ et $D_{asp} = f(P_{adm}, \Phi_{adm}, \Phi_{ech})$ et $D_{gb} = \varphi(\Delta P)$

ou en écrivant

$$\frac{d}{dt} BGR_{bp}(t) = \frac{rT_{am}}{P_{atm} V_{bp}} \left( - D_{thr} BGR_{bp} + [D_{thr} - D_{air}(t)] \right)$$

Avec $D_{thr} = g\left( D_{asp}, \frac{dP_{adm}}{dt} \right)$ et $D_{asp} = f(P_{adm}, \Phi_{adm}, \Phi_{ech})$

selon l'instrumentation du moteur.

Ainsi on estime la fraction massique $BGR_{bp}$ de gaz brûlés présente dans le volume de mélange. L'estimation de $D_{thr}$ est réalisée à partir de paramètres connus, et l'estimation de $D_{gb}(t)$ est réalisée soit au moyen de la mesure de différence entre la pression en aval de la vanne EGR et la pression en amont de la vanne EGR (étape 1) et de l'application d'une relation de charge ponctuelle au niveau de la vanne EGR, par exemple la relation de Barré-Saint Venant, soit au moyen de la mesure d'un débitmètre d'air (étape 1) et par bilan de masse exploitant l'estimation $D_{thr}$.

L'estimation obtenue par cette méthodologie peut être initialisée (ou recalée) lorsque la vanne EGR est fermée et que le taux de gaz brulés en aval de la vanne est nul.

ii. Estimation du retard de transport depuis ce volume jusqu'au collecteur d'admission

Pour remonter à une estimation de la fraction massique de gaz brûlés au niveau du collecteur d'admission, à partir de la fraction massique de gaz brûlés au niveau du volume de mélange, on applique un retard pur à l'estimateur de $BGR_{bp}$, retard consécutif au trajet du volume de mélange jusqu'au collecteur d'admission.

On note $\tau$ ce retard de transport des gaz entre le moment du mélange entre l'air frais et des gaz brûlés et l'arrivée dans le collecteur d'admission. Ce retard est fonction de la distance parcourue et de la vitesse du mélange d'air. On note $L_{cana}$ la longueur de la canalisation considérée, et $v$ la vitesse ponctuelle du mélange d'air. On note également A la section efficace courante de la canalisation considérée dans laquelle circule le mélange. Enfin D, représente le débit massique courant.

Le retard pur τ peut être défini implicitement à partir d'une loi d'écoulement laminaire :

$$L_{cana} = \int_{-\tau(t)}^{t} v(s)\,ds \qquad\qquad (E7)$$

$$v(s) = \frac{D(s)rT(s)}{AP(s)} \qquad\qquad (E8)$$

où les conditions thermodynamiques (pression P et température T) interviennent dans la relation entre vitesse et débit massique ((E8)), et où s est une variable d'intégration (variable muette).

Afin d'estimer ce retard pur à partir des équations E7 et E8, on divise la ligne d'admission selon les conditions thermodynamiques y régnant. Le but est que les conditions thermodynamiques au sein de chaque zone soient stables (constantes, ou variant linéairement). Cette segmentation dépend donc de l'architecture du moteur.

Ainsi, selon un mode de réalisation, les définitions des zones par rapport aux conditions thermodynamiques conduisent à la segmentation suivante :

- la première zone est située entre la vanne EGR et le compresseur du turbocompresseur (7). Les conditions thermodynamiques de cette zone correspondent aux conditions atmosphériques.

- la seconde zone s'étend du compresseur du turbocompresseur (7) jusqu'au refroidisseur RAS (4). On considère que la pression et la température sur cette zone sont homogènes. Elles sont mesurées par un capteur dédié.

- la dernière zone considérée est située entre le refroidisseur RAS (4) et le papillon d'air (13). ). Le refroidisseur étant dimensionné de sorte à diminuer drastiquement la température, on considère cette dernière comme homogène et égale à la température dans le collecteur, mesurée. La pression y est également considérée comme homogène et égale à celle située dans la seconde zone, en amont du refroidisseur.

Sur chacun de ces segments, on résout par calcul direct la relation d'écoulement de type (E7)-(E8), en itérant depuis le début de la ligne d'admission (vanne EGR). Cette résolution peut se faire par discrétisation de l'intégrale et calcul numérique direct. Cette relation utilise des données thermodynamiques, qui sont obtenus soit par mesures directes soit via des modèles, selon la définition technique capteurs du moteur. Par ailleurs, la valeur du débit massique D est approchée par le modèle (E3).

Une fois que le retard r est déterminé, on applique la relation (E2) pour obtenir en temps réel une estimation de la fraction massique de gaz brûlés présente dans le mélange au niveau du collecteur d'admission.

$$BGR(t) = BGR_{bp}(t - \tau(t)) \qquad\qquad (E2)$$

La figure 2 illustre un résultat de l'estimation de la fraction massique de gaz brûlés présente dans le mélange au niveau du collecteur d'admission, en utilisant le procédé selon l'invention. Les points de fonctionnement considérés couvrent une large plage : le régime moteur varie entre 1000 tr/min et 3000 tr/min par incréments de 500 tr/min et, pour chaque régime moteur, la demande de couple vaut 20 puis 220 Nm. La valeur de BGR estimé (BGR$^e$) est en trait continu, et la valeur réelle (BGR$^r$) mesurée est en pointillé. L'axe des ordonnées indique la valeur de BGR (estimée ou mesurée) et l'axe des abscisses indique le temps t en s.

### 3. Contrôle moteur à partir du BGR estimé

L'estimation de la composition des gaz dans le collecteur d'admission permet alors de contrôle la combustion. On peut ainsi contrôler l'avance à l'allumage, ou contrôler la composition des gaz entrant dans le cylindre.

i Contrôle de l'avance à l'allumage

Dans un moteur à explosion, la combustion du mélange air/essence commence normalement après l'étincelle. Le front de flamme se propage et son souffle repousse une partie du mélange contre les parois du cylindre et le sommet du piston. L'élévation de pression et de température devient tellement importante que le combustible coincé contre les parois atteint son point d'auto-allumage et s'auto enflamme à plusieurs endroits. Ce phénomène est appelé « cliquetis ». Ainsi le cliquetis est avant tout un phénomène de combustion anormale dans les moteurs à allumage commandé, perceptible extérieurement par un bruit métallique venant du moteur. Il résulte de l'apparition d'ondes de choc dans la chambre de combustion.

Pour éviter l'apparition de ce phénomène, l'allumage est piloté en fonction du régime moteur et de la masse d'air aspiré afin de garantir qu'il n'y aura pas de combustion. Ainsi, traditionnellement, le contrôle de l'avance à l'allumage s'écrit

$$AaA = f(Ne, M_{air})$$

où

- la fonction f est une cartographie statique

- AaA est l'angle vilebrequin auquel l'allumage doit être réalisé

- Mair est la masse d'air (air frais et gaz brûlés).

- $Ne$ est le régime du moteur.

Dans le cas de l'utilisation de l'EGR basse pression, la présence de gaz brûlés (et donc neutre) permet de ralentir la combustion et d'éviter ce phénomène de combustion anormale. Ainsi, nous pouvons ré-optimiser l'avance à l'allumage afin d'améliorer le rendement de combustion. Cette ré-optimisation se base sur la connaissance de la composition des gaz dans le collecteur d'admission, en ajoutant un terme proportionnel à la fraction massique $BGR(t)$ de gaz brûlés dans le collecteur d'admission. Le contrôle d'avance se réécrit :

$$AaA = f(Ne, M_{air}) + g(Ne, M_{air})BGR$$

où la fonction g est une cartographie statique.
Les fonctions f et g sont déterminés aux bancs moteurs, de façon connue des spécialistes.
Dans cette stratégie de contrôle moteur, le procédé d'estimation du BGR est très important pour piloter la combustion.

ii Contrôle de la composition des gaz

Cela permet donc de piloter la composition de gaz brûlés dans le cylindre. Pour ce faire, on réalise les étapes suivantes :

- on choisit une consigne de fraction de gaz brûlés dans le collecteur d'admission (3) $BGR^{sp}$ ;

- on estime la fraction massique $BGR(t)$ de gaz brûlés présente dans le mélange au niveau du collecteur d'admission, selon le procédé des étapes 1 et 2 ;

- on calcule une consigne d'ouverture $O^{sp}$ de la vanne EGR (6) permettant de minimiser l'écart entre $BGR(t)$ et $BGR^{sp}$ ; et

- on commande ladite vanne EGR (6) en fonction de la consigne d'ouverture de la vanne EGR (6).

Selon un mode de réalisation, on calcule une consigne d'ouverture $O^{sp}$ de la vanne EGR (6) avec un contrôleur de type proportionnel intégral. Pour appliquer la consigne d'ouverture de la vanne $O^{sp}$ à la vanne, on peut utiliser une commande manuelle, hydraulique, pneumatique, électrique, électronique ou mécanique de la vanne.

Dans cette stratégie de contrôle moteur, le procédé d'estimation du BGR est vital pour piloter la composition des gaz afin d'assurer le bon déroulement de la combustion.

L'invention concerne également un moteur à combustion (1) comprenant au moins un cylindre (2), un collecteur d'admission (3), et un circuit de recirculation des gaz brûlés comportant une vanne EGR (6). Le moteur est pourvu d'un capteur de pression (5) au niveau de la vanne EGR (6) ou d'un débitmètre d'air (5') au début de la ligne d'admission. Le moteur comprend également des moyens (contrôleurs, logiciels) de contrôle adaptés à appliquer le procédé de contrôle selon l'invention.

**Revendications**

1. Procédé de contrôle de combustion d'un moteur à combustion (1) comprenant au moins un cylindre (2), un circuit d'admission comportant un collecteur d'admission (3), et un circuit de recirculation des gaz brûlés intégrant une vanne EGR (6), **caractérisé en ce qu'il** comporte les étapes suivantes :

   - on réalise une mesure relative à un débit de gaz, air frais ou gaz brûlés, en amont d'un volume $V_{bp}$ de mélange, dans lequel air frais et gaz brûlés se mélangent ;
   - on estime une fraction massique $BGR_{bp}$ de gaz brûlés présente dans ledit volume de mélange, à partir de ladite mesure et d'un modèle de la dynamique de mélange dans ledit volume ;
   - on estime un retard de transport depuis ledit volume jusqu'audit collecteur d'admission ;
   - on estime en temps réel une fraction massique $BGR(t)$ de gaz brûlés dans le collecteur d'admission à partir de ladite estimation de la fraction massique de gaz brûlés présente dans le volume de mélange et ledit retard de transport ;
   - on contrôle la combustion à partir de ladite fraction massique $BGR(t)$ de gaz brûlés dans le collecteur d'admission.

2. Procédé selon la revendication 1, dans lequel ledit modèle de la dynamique de mélange dans le volume de mélange est fonction d'une pression atmosphérique, d'une température en amont de la vanne EGR, dudit volume $V_{bp}$, d'un débit massique $D_{gb}(t)$ de gaz brûlés introduit par la vanne EGR, et d'un débit massique d'air frais $D_{air}(t)$ en entrée du circuit d'admission.

3. Procédé selon l'une des revendications précédentes, dans lequel on calcule le retard pur $\tau$ en résolvant une loi d'écoulement laminaire itérativement sur des zones du circuit d'admission définies de façon à ce que des conditions thermodynamiques dans chaque zone soient homogènes.

4. Procédé selon la revendication 3, dans lequel on définit trois zones de la façon suivante : une première zone dans laquelle les conditions thermodynamiques correspondent aux conditions atmosphériques ; une seconde zone dans laquelle pression et température augmentent lors du transport des gaz, et une troisième zone où la température diminue, constituée par la zone restante du circuit d'admission.

5. Procédé selon l'une des revendications précédentes, dans lequel la mesure est une mesure de débit massique d'air frais en entrée de la ligne d'admission.

6. Procédé selon l'une des revendications précédentes, dans lequel la mesure est une mesure d'une différence de pression $\Delta P$ au niveau de la vanne EGR, et on estime la fraction massique $BGR_{bp}$ de gaz brûlés présente dans ledit volume, à partir de la différence de pression $\Delta P$ et à partir d'une relation de perte de charge ponctuelle appliquée au niveau de ladite vanne EGR.

7. Procédé selon l'une des revendications précédentes, dans lequel on contrôle la combustion par un pilotage d'une avance à l'allumage en ajoutant un terme proportionnel à la fraction massique $BGR(t)$ de gaz brûlés dans le collecteur d'admission.

8. Procédé selon l'une des revendications 1 à 6, dans lequel on contrôle la combustion par un pilotage d'une masse d'air enfermée dans le cylindre, en commandant ladite vanne EGR (6) de façon à minimiser l'écart entre $BGR(t)$ et une consigne de fraction de gaz brûlés dans ledit collecteur d'admission (3) $BGR^{sp}$.

9.  Moteur à combustion (1) comprenant au moins un cylindre (2), un collecteur d'admission (3), et un circuit de recirculation des gaz brûlés comportant une vanne EGR (6), ledit moteur à combustion étant pourvu d'un capteur de pression (5) au niveau de ladite vanne EGR (6) ou d'un débitmètre d'air (5') au début de la ligne d'admission, **caractérisé en ce que** ledit moteur (1) comprend des moyens de commande adaptés à appliquer le procédé de contrôle selon l'une des revendications précédentes.

**Fig. 1**

**Fig. 2**

**Fig. 3**

Europäisches
Patentamt

European
Patent Office

Office européen
des brevets

**RAPPORT DE RECHERCHE EUROPEENNE**

Numéro de la demande

EP 12 29 0302

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 196 28 235 A1 (NISSAN MOTOR [JP]) 16 janvier 1997 (1997-01-16) * abrégé; revendications 1,2,5; figures 1,4,5,13,18,26 * * colonne 10, ligne 60 - colonne 22, ligne 64 * ----- | 1-9 | INV. F02D41/00 |
| A | WO 2010/112719 A1 (RENAULT SAS [FR]; FONTVIEILLE LAURENT [FR]; ETCHEVERRY CELINE [FR]) 7 octobre 2010 (2010-10-07) * abrégé; revendications 1,7,9; figure 1 * * page 7, ligne 22 - page 17, ligne 3 * ----- | 1,2,5,7,9 | |
| A | DE 103 25 847 A1 (MITSUBISHI MOTORS CORP [JP]) 4 mars 2004 (2004-03-04) * abrégé; revendication 1; figure 2 * * alinéa [0045] - alinéa [0074] * ----- | 1,7 | |
| A | EP 2 169 205 A2 (BENTELER AUTOMOBILTECHNIK GMBH [DE]) 31 mars 2010 (2010-03-31) * abrégé; revendication 1; figure 1 * * alinéa [0013] - alinéa [0016] * ----- | 1,9 | DOMAINES TECHNIQUES RECHERCHES (IPC) F02D F02M |

Le présent rapport a été établi pour toutes les revendications

| Lieu de la recherche | Date d'achèvement de la recherche | Examinateur |
|---|---|---|
| La Haye | 9 novembre 2012 | Van der Staay, Frank |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 29 0302

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-11-2012

| Document brevet cité au rapport de recherche | Date de publication | Membre(s) de la famille de brevet(s) | Date de publication |
|---|---|---|---|
| DE 19628235 A1 | 16-01-1997 | AUCUN | |
| WO 2010112719 A1 | 07-10-2010 | EP 2414658 A1<br>FR 2944058 A1<br>WO 2010112719 A1 | 08-02-2012<br>08-10-2010<br>07-10-2010 |
| DE 10325847 A1 | 04-03-2004 | DE 10325847 A1<br>JP 4069361 B2<br>JP 2004011619 A<br>US 2003226544 A1 | 04-03-2004<br>02-04-2008<br>15-01-2004<br>11-12-2003 |
| EP 2169205 A2 | 31-03-2010 | DE 102008048973 A1<br>EP 2169205 A2<br>US 2010071674 A1 | 08-04-2010<br>31-03-2010<br>25-03-2010 |

EPO FORM P0460